# EUROPEAN PATENT SPECIFICATION

(11) **EP 4 467 296 B1**
(45) Date of publication and mention of the grant of the patent: **29.04.2026**
(21) Application number: 23183642.0
(22) Date of filing: 05.07.2023
(51) Int. Cl.: B25J 15/00, B25J 15/02

(54) **ANTHROPOMORPHIC METAMORPHIC DEXTEROUS HAND**
ANTHROPOMORPHE METAMORPHE GEDUFTE HAND
MAIN DEXTERE MÉTAMORPHIQUE ANTHROPOMORPHIQUE

(30) Priority: 25.05.2023 CN 202310605589
(43) Date of publication of application: 27.11.2024
(73) Proprietor: Southern University of Science and Technology, Nanshan District Shenzhen, Guangdong 518055 (CN)
(72) Inventor: DAI, Jiansheng, Guangdong, 518055 (CN); WANG, Hongqiang, Guangdong, 518055 (CN); ZHU, Renjie, Guangdong, 518055 (CN); QU, Sijing, Guangdong, 518055 (CN); BAO, Chenbo, Guangdong, 518055 (CN)
(74) Representative: Klunker IP Patentanwälte PartG mbB

(56) References cited:
- CN-A- 102 092 049
- CN-A- 113 386 160
- CN-A- 113 733 131
- CN-A- 114 043 522
- US-A1- 2013 119 687
- US-A1- 2022 040 868
- EMMANOUIL EVANGELOS ET AL: "Spherical trigonometry constrained kinematics for a dexterous robotic hand with an articulated palm", INTERNET CITATION, 1 December 2016 (2016-12-01), pages 2788 - 2805, XP009545218, ISSN: 0263-5747, Retrieved from the Internet <URL:https://www.cambridge.org/core/journals/robotica/article/abs/spherical-trigonometry-constrained-kinematics-for-a-dexterous-robotic-hand-with-an-articulated-palm/BA703195D1BA21C5A48FF29756752685>

## Description

### TECHNICAL FIELD

The present invention relates to the technical field of robots, and in particular to, an anthropomorphic metamorphic dexterous hand.

### BACKGROUND

Manipulators can replace human hands to execute a plurality of tasks in complex and harsh environments. Traditional manipulators are provided with fully rigid palms and fingers in order to adapt to grabbing scenarios requiring high load-bearing capacity, but the flexibility and control capability are limited. In addition, driving mechanisms of the manipulators require complex structural design, which causes the manipulators to be redundant and complex, high in cost and low in reliability. Furthermore, in practical use occasions, in order to better simulate human hands to work and execute corresponding grabbing tasks, the manipulators need to have certain flexibility while having overall rigidity, but conventional manipulators cannot meet the above requirements.

US 2013 / 0 119 687 A1 discloses an improved robotic hand in which the palm section enables it to be capable of a wide range of movement with the ability to have good precision and control. The palm section consists of a plurality of parts which are able to move or flex relative to each other. Preferably, it is constructed as five bar spherical linkage having two degrees of freedom.

US 20220 / 0 040 868 A1 discloses a soft bodied robotic member, which has the appearance of a finger and has a deformable rubber elongated body surrounding an array of rigid ribs interconnected by a perpendicular constraint. The plates form a series of parallel protrusions extending from opposed sides of the body and have a serrated, sawtooth or wavelike appearance. A tether runs through each row of protrusions and draws the corresponding protrusions together in a compressive manner to bend or dispose the finger toward the compressed side. Gaps between the protrusion allow movement of the protrusion towards adjacent protrusions to dispose the body in an arcuate shape. The constraint is a planar sheet that bends with the arc along its width, but resists lateral twisting, thus limiting movement outside a plane defined by the arc and the tether. Multiple finger members may be placed in close geometric proximity for gripping a common object.

In the paper "Spherical trigonometry constrained kinematics for a dexterous robotic hand with an articulated palm", EMMANOUIL EVANGELOS et. al. discloses that a method based on spherical trigonometry for computing all joint angles of the spherical metamorphic palm. The spherical palm is segmented into spherical triangles which are then solved and combined to fully solve the palm configuration. Further, singularity analysis is investigated with the analysis of each spherical triangle the palm is decomposed, Singularity-avoidance-based design criteria are then presented, Finally, point clouds are generated that represent the joint space of the palm as well as the workspace of the hand with the advantage of an articulated palm is shown.

CN 102 092 049 A discloses a humanoid dexterous hand with a variable-shape palm, which comprises the palm and three-five fingers connected with the palm, wherein the palm is constituted by a closed spherical five-connecting rod mechanism formed by sequentially connecting a palm arm connecting rod, a palm connecting rod I, a palm connecting rod II, a palm connecting rod III and a palm connecting rod IV; and each finger comprises a finger base, a finger base connecting rod, a finger intermediate connecting rod and a finger tail end, in each finger, the adjacent ends of the finger intermediate connecting rod and the finger tail end are sequentially connected by rotation through a rotating shaft, the finger base is fixedly connected on the connecting rod for constituting the palm, three rotating shafts on each finger are connected with a rotary driving device, and the finger base connecting rod, the finger intermediate connecting rod and the finger tail end can rotate around the respective rotating shaft lines of the three rotating shafts under the drive of the rotary driving device. The humanoid dexterous hand comprises the palm in variable degrees of freedom and shapes; furthermore, the structure is simple and the volume is small. Documents CN114043522A and CN113733131A show other examples of finger structures.

### SUMMARY

The present invention aims at solving at least one of the technical problems in the existing technology. Therefore, the present invention provides an anthropomorphic metamorphic dexterous hand, which can take into account both the rigidity and flexibility of a manipulator.

An anthropomorphic metamorphic dexterous hand is set out in the appended claims.

Additional aspects and advantages of the present invention will be set forth in part in the following description, and in part will be apparent from the following description, or may be learned by practice of the present invention.

### BRIEF DESCRIPTION OF DRAWINGS

The present invention will be further illustrated below in conjunction with the drawings and embodiments, in which:
Fig. 1 is a schematic structural diagram of an embodiment of an anthropomorphic metamorphic dexterous hand of the present invention;
Fig. 2 is a schematic diagram of an embodiment of a finger module;
Fig. 3 is an explosive schematic diagram of a finger back unit and a finger pulp unit in Fig. 2;
Fig. 4 is a sectional view of a finger back unit and a finger pulp unit;
Fig. 5 is an enlarged view at A in Fig. 2;
Fig. 6 is a schematic diagram of an embodiment of a finger pulp unit;
Fig. 7 is a schematic diagram of a finger pulp unit in Fig. 6 in another direction;
Fig. 8 is a schematic diagram of a finger module with a winding roller hidden; and
Fig. 9 is a schematic diagram of an embodiment of a palm connecting rod.

### Reference numerals:

palm module 100, palm connecting rod 110, support arm 111, palm driving unit 120;
finger module 200, finger back unit 210, finger back connector 211, finger back connecting surface 2111, finger back vertex angle 2112, second cavity 2113, guide hole 2114, finger back bending part 212, reinforcing part 213, finger pulp unit 220, finger pulp connector 221, finger pulp connecting surface 2211, finger pulp vertex angle 2212, notch 2213, first cavity 2214, finger pulp bending part 222, transition part 223, finger driving unit 230, finger back traction wire 240, finger pulp traction wire 250, fixed seat 260, wire guiding hole 261, winding roller 270;
base 300.

### DETAILED DESCRIPTION

Embodiments of the present invention will be described below in detail. Examples of the embodiments are shown in the drawings, where same or similar reference numerals indicate same or similar elements or elements having same or similar functions throughout the drawings. Embodiments described below with reference to the drawings are example embodiments, which are only used for illustrating the present invention, and are not intended to limit the present invention.

It should be understood in the description of the present invention that terms such as "upper", "lower", "before", "after", "left", "right", etc., indicate directional or positional relationships shown based on the drawings, and are only intended to facilitate the description of the present invention and simplify the description, rather than to indicate or imply that the indicated devices or elements must have a specific orientation or constructed and operated in a specific orientation, and therefore, shall not be understood as a limitation to the present invention.

In the description of the present invention, "several" means one or more, and "a plurality of" means two or more. The terms such as "greater than", "less than", "exceeding" and the like are understood as excluding the following number, while "above", "below", "within" and the like are understood as including the following number. The terms such as "first", "second" and the like are only used for distinguishing technical features, and are not to be construed as indicating or implying relative importance or implying the number or a precedence order of indicated technical features.

In the description of the present invention, unless otherwise specifically defined, terms such as "arrangement", "mount," and "connection" shall be understood in a broad sense. For those having ordinary skills in the art, the specific meanings of the above terms in the present invention should be reasonably determined in combination with the specific content of the technical scheme.

In the description of the present invention, description with reference to the terms "an embodiment", "some embodiments", "illustrative embodiments", "examples", "specific examples" or "some examples" means that the specific features, structures, materials or characteristics described in conjunction with the embodiment or example is included in at least one embodiment or example of the present invention. In this description, the schematic expressions of the above terms do not necessarily refer to the same embodiments or examples. Furthermore, the specific features, structures, materials or characteristics described may be combined in any one or more embodiments or examples in a suitable manner.

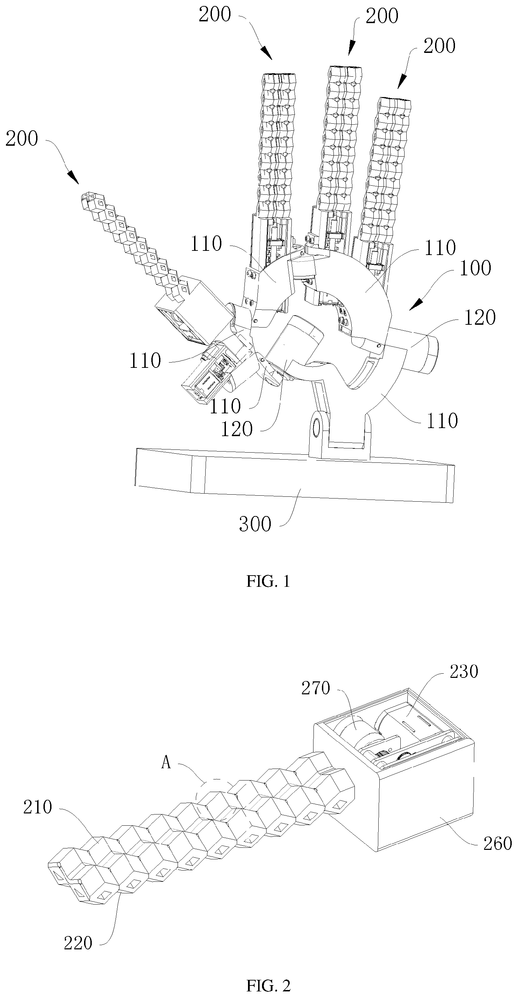

Referring to Fig. 1, an embodiment of the present invention provides an anthropomorphic metamorphic dexterous hand, which includes a palm module 100 and a plurality of finger modules 200, which are mounted on the palm module 100. The palm module 100 and the finger modules 200 are respectively configured to simulate the palm and fingers of a human hand, and the plurality of finger modules 200 cooperate to execute corresponding grabbing tasks.

In an embodiment, the palm module 100 includes a plurality of palm connecting rods 110 and a palm driving unit 120. The plurality of palm connecting rods 110 are rotationally connected end to end in sequence and enclosed to form a closed-loop structure, and the palm driving unit 120 is connected to some of the palm connecting rods 110 to drive adjacent palm connecting rods 110 to rotate relatively. In order to facilitate a grabbing action, three to five finger modules 200 are provided, and the finger modules 200 are mounted on only some palm connecting rods 110. In addition, only some palm connecting rods 110 are directly driven by the palm driving unit 120 to rotate, and other palm connecting rods 110 are driven by another palm driving unit 120 connected therewith to rotate. Because the plurality of palm connecting rods 110 are rotationally connected to form a closed-loop structure, the number of palm connecting rods 110 participating in rotation and the degree of freedom of the palm module 100 are changed under the drive of the palm driving unit 120, to form the palm module 100 into a metamorphic mechanism. In this way, the palm module 100 can present different configurations, so that the finger module 200 can change different grabbing angles, and therefore can be adapted to grabbing requirements in various task environments.

Referring to Fig. 2 to Fig. 4, the finger module 200 includes a finger back unit 210, a finger pulp unit 220 and a finger driving unit 230. The finger back unit 210 and the finger pulp unit 220 are stacked, and the finger pulp unit 220 has a greater flexibility than the finger back unit 210. The finger back unit 210 is internally threaded with a finger back traction wire 240, and the finger pulp unit 220 is internally threaded with a finger pulp traction wire 250. One end of the finger back traction wire 240 is connected to a tail end of the finger back unit 210, and the other end of the finger back traction wire is connected to the finger driving unit 230. One end of the finger pulp traction wire 250 is connected to a tail end of the finger pulp unit 220, and the other end of the finger pulp traction wire is connected to the finger driving unit 230. The finger driving unit 230 is configured to drive the finger back traction wire 240 and the finger pulp traction wire 250 to retract and extend to enable the finger module 200 to bend towards the finger pulp unit 220 or stretch away from the finger pulp unit 220. By means of examples, the finger module 200 in an initial state assumes a linear shape, and the finger driving unit 230 pulls the finger pulp traction wire 250 to tighten and at the same time releases the finger back traction wire 240. In this case, the finger pulp unit 220 is pulled by the finger back traction wire 240 to bend and curl, while the finger back unit 210 is not pulled by the finger back traction wire 240, but is driven by the finger pulp unit 220 to bend synchronously with the finger pulp unit 220. At this time, the finger module 200 can execute a grabbing task. The finger driving unit 230 tightens the finger back traction wire 240 while releasing the finger back traction wire 250. In this case, the finger back unit 210 is pulled by the finger back traction wire 240 to stretch from a bending state, while the finger back unit 220 is not pulled by the finger back traction wire 250, but is driven by the finger back unit 210 to synchronously stretch, so that the finger module 200 returns to the initial state at which the finger module 200 releases the grabbed object.

It should be noted that the anthropomorphic metamorphic dexterous hand in the present invention highly restores an effect of cooperation between the palm and fingers when a human hand performs a grabbing action. For example, when the human hand performs the grabbing action, the palm wraps and contracts in a direction of a palm center, and each finger bends and curls towards the palm center. In the present invention, the plurality of palm connecting rods 110 of the palm module 100 can change configuration and rotate towards the palm center of the palm module 100 under the drive of the palm driving unit 120. The finger driving unit 230 of the finger module 200 pulls the finger back unit 210 and the finger pulp unit 220 to bend through the traction wires, to envelop the object between the finger module 200 and the palm center by cooperating with the contraction of the palm module 100, thereby completing the grabbing task.

Further, the finger pulp unit 220 is set to have a greater flexibility than the finger back unit 210 in the present invention. On the one hand, when executing a grabbing task, the finger pulp unit 220 contacts an object to be grabbed, and the finger pulp unit 220 with higher flexibility has a high degree of fit with the object to be grabbed and thus can be adapted to the shape of the object to be grabbed to realize stable grabbing without causing damage to the object to be grabbed due to hard contact and collision with the object to be grabbed. On the other hand, the finger pulp unit 220 and the finger back unit 210 realize the combination of flexibility and hardness. To be specific, the finger back unit 210 has a higher hardness than the finger pulp unit 220, and the finger pulp unit 220 has a higher flexibility than the finger back unit 210. The finger back unit 210 provides a certain degree of rigid support for the finger module 200 to prevent an overall flexibility of the finger module 200 from being too large and affecting the structural strength. The finger pulp unit 220 has higher flexibility, which facilitates the finger module 200 to bend towards the finger pulp unit 220, and conforms to the characteristic that human fingers can only bend towards the palm center. Thus, the finger module 200 has both rigidity and flexibility, and meets the requirements for the rigidity and flexibility of a manipulator in different grabbing environments.

It should be noted that since each finger module 200 is connected to a different palm connecting rod 110, the finger modules 200 bend in different directions, but all bend towards the palm center of the palm module 100, and when the finger module 200 bends, the finger back unit 210 bends towards the finger pulp unit 220.

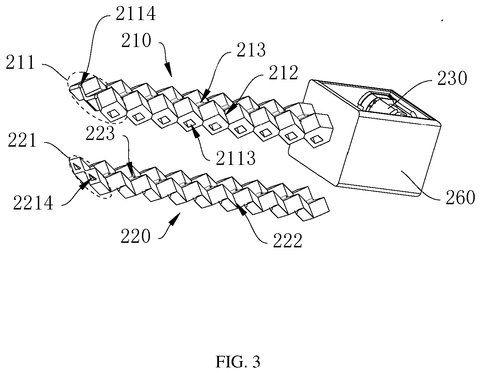

In some embodiments, referring to Fig. 3, the finger pulp unit 220 includes a plurality of finger pulp connectors 221 arranged in a length direction of the finger module 200, edges of adjacent finger pulp connectors 221 which are close to each other are connected to form a finger pulp bending part 222, and the finger pulp bending part 222 has a smaller thickness than the finger pulp connector 221. In this way, the plurality of finger pulp connectors 221 are connected to form the finger pulp unit 220. When bending, the finger pulp unit 220 bends based on a joint of adjacent finger pulp connectors 221, that is, the finger pulp bending part 222. Because the finger pulp bending part 222 has a smaller thickness, the bending of the finger pulp unit 220 is more convenient. Similarly, the finger back unit 210 includes a plurality of finger back connectors 211 arranged in the length direction of the finger module 200, edges of adjacent finger back connectors 211 which are close to each other are connected to form a finger back bending part 212, and the finger back bending part 212 has a smaller thickness than the finger back connector 211. In this way, the plurality of finger back connectors 211 are connected to form the finger back unit 210. When bending, the finger back unit 210 bends based on a joint of the adjacent finger back connectors 211, that is, the finger back bending part 212. Because the finger back bending part 212 has a smaller thickness, the bending of the finger back unit 210 is more convenient. Further, the finger back bending part 212 and the finger pulp bending part 222 are oppositely arranged in the bending direction of the finger module 200. When the finger module 200 bends, the bending positions of the finger back unit 210 and the finger pulp unit 220 are matched, so as to avoid that the bending of the finger back unit 210 and the bending of the finger pulp unit 220 interfere with each other during the bending of the finger module 200 due to the misalignment of the bending positions of the finger back unit 210 and the finger pulp unit 220, and affect the grabbing efficiency.

Further, the plurality of finger pulp connectors 221 are arranged in a width direction of the finger module 200, edges of adjacent finger pulp connectors 221 in the width direction which are close to each other are connected to form a transition part 223, and the transition part 223 is recessed away from the finger back unit 210. Similarly, the plurality of finger back connectors 211 are arranged in the width direction of the finger module 200, edges of adjacent finger back connectors 211 in the width direction which are close to each other are connected to form a reinforcing part 213, and the reinforcing part 213 protrudes towards the finger pulp units 220 and is located between adjacent finger pulp units 220. The finger pulp connectors 221 and the finger back connectors 211 are arranged in the width direction, which can increase a grabbing surface of the finger module 200 and a contact area between the finger module 200 and the object to be grabbed, and improve an envelope degree of the finger module 200 to the object to be grabbed. Moreover, due to an increased distance in the width direction of the finger back unit 210, the strength of the finger module 200 in the width direction is increased, avoiding deformation of the finger module 200 in the width direction when the finger module 200 bends, and improving the stability of the finger module 200 in grabbing. In addition, the transition part 223 of the finger pulp unit 220 cooperates with the reinforcing part 213 of the finger back unit 210, and the reinforcing part 213 abuts against an adjacent finger pulp unit 220 in the width direction. Since the finger back unit 210 has a higher strength than the finger pulp unit 220, the strength of the finger module 200 in the width direction can be further improved, preventing the finger module 200 from stretching or bending in the width direction.

It should be noted that the length direction refers to an overall extension direction of the finger module 200, and the finger module 200 extends away from the palm module 100, which conforms to the basic form of a human hand. The width direction refers to an arrangement direction of adjacent finger modules 200.

The plurality of finger pulp connectors 221 arranged in the length direction form a finger pulp bending group, and the plurality of finger back connectors 211 arranged in the length direction form a finger back bending group. When the finger pulp connectors 221 and finger back connectors 211 are arranged in multiple, both the finger pulp bending group and finger back bending group are provided in multiple, and adjacent finger pulp connecting groups are connected by a transition part 223, and adjacent finger back connecting groups are connected by a reinforcing part 213. It should be noted that each finger pulp connecting group is internally threaded with one finger pulp traction wire 250, and the number of finger pulp traction wires 250 in one finger module 200 is the same as that of the finger pulp connectors 221 arranged in the width direction. Similarly, each finger back connection group is internally threaded with one finger back traction wire 240, and the number of finger back traction wires 240 in one finger module 200 is the same as that of the finger back connectors 211 arranged in the width direction. In this way, the influence of the flexibility of the finger back unit 210 and the finger pulp unit 220 on traction accuracy can be reduced, the finger back bending group and the finger pulp bending group in the same finger module 200 can bend synchronously, and the traction effects of the traction wires on different regions of the finger back unit 210 and the finger pulp unit 220 are relatively uniform, thus improving the grabbing strength of the finger module 200 to the object to be grabbed.

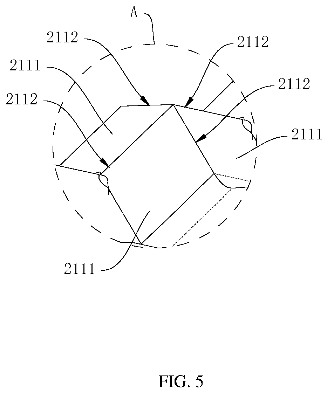

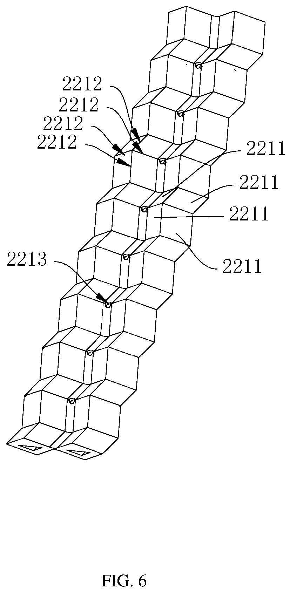

In the present invention, referring to Fig. 5, the finger back connector 211 includes four finger back connecting surfaces 2111 which are connected end to end in sequence at side edges thereof, and vertexes of the four finger back connecting surfaces 2111 are overlapped to form finger back vertex angles 2112. The side edges of adjacent finger back connecting surfaces 2111 are connected with each other to form combination ridges, each finger back connector 211 includes four combination ridges, where two combination ridges extend in the width direction of the finger module 200 and are located at opposite sides of the finger back vertex angle 2112, and another two combination ridges extend in the length direction of the finger module 200 and are located at the opposite sides of the finger back vertex angle 2112. Similarly, referring to Fig. 6, the finger pulp connector 221 includes four finger pulp connecting surfaces 2211 which are connected end to end in sequence at side edges thereof, and vertexes of the four finger pulp connecting surfaces 2211 are overlapped to form finger pulp vertex angles 2212. The side edges of adjacent finger pulp connecting surfaces 2211 are connected with each other to form combination ridges, each finger pulp connector 221 includes four combination ridges, where two combination ridges extend in the width direction of the finger module 200 and are located at the opposite sides of the finger pulp vertex angle 2212, and another two combination ridges extend in the length direction of the finger module 200 and are located at the opposite sides of the finger pulp vertex angle 2212.

It should be noted that the finger pulp vertex angles 2212 are located at the side of the finger pulp unit 220 facing away from the bending direction, and the finger back vertex angles 2112 are located at the side of the finger back unit 210 facing away from the bending direction. After the finger back unit 210 and the finger pulp unit 220 are stacked, the finger back vertex angles 2112 are located at the side of the finger pulp vertex angles 2212 facing away from the bending direction, and the combination ridges of the finger back connector 211 correspond to the combination ridges of the finger pulp connector 221 in position in the bending direction of the finger module 200. In this embodiment, in the width direction of the finger module 200, the opening of the finger back vertex angle 2112 is set to be not smaller than that of the finger pulp vertex angle 2212, and two combination ridges extending in the width direction of the finger back finger unit 210 can provide greater support in the width direction. Since the finger back unit 210 has a greater hardness than the finger pulp unit 220, the finger back unit 210 can provide greater support for the finger pulp unit 220 in the width direction, thereby improving the strength of the finger module 200 in the width direction, and reducing the retraction and bending of the finger module 200 in the width direction.

In an embodiment, the finger back unit 210 and the finger pulp unit 220 are connected to form an integrated structure. That is, the finger back unit 210 and the finger pulp unit 220 are integrally formed without post-assembly. On the one hand, the assembly difficulty of the finger module 200 is reduced, and on the other hand, the matching accuracy between the finger back bending part 212 and the finger pulp bending part 222 is high, so that the finger module 200 has high bending performance. By means of examples, the finger back unit 210 and the finger pulp unit 220 are formed by injection molding, 3D printing or other processing methods.

In other embodiments, the finger back connector 211 and the finger pulp connector 221 are mutually adhered at opposite sides, and the finger back bending part 212 and the finger pulp bending part 222 are provided in a separate structure. Therefore, in the stacking direction of the finger back unit 210 and the finger pulp unit 220, the finger back connector 211 and the finger pulp connector 221 are mutually adhered, so that the finger back unit 210 and the finger pulp unit 220 form an integrated structure and can bend synchronously, and thus the connection is simple and quick. In addition, since the finger back bending part 212 and the finger pulp bending part 222 are not connected and are independent from each other, the influence of adhering on the bending performance of the finger module 200 can be reduced, allowing the finger back bending part 212 and the finger pulp bending part 222 to bend freely, and improving the bending flexibility of the finger module 200.

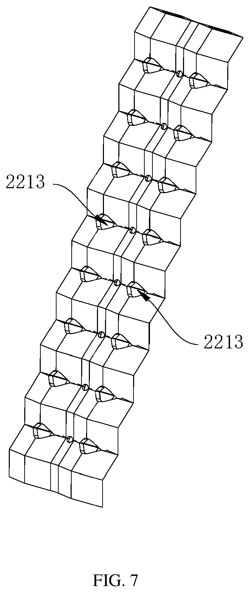

In the present invention, referring to Fig. 6 and Fig. 7, the finger pulp connector 221 is provided with a notch 2213 at the edge, and the notches 2213 of adjacent finger pulp connectors 221 in the length direction are oppositely arranged. After the adjacent finger pulp connectors 221 in the length direction are connected with each other, the two notches 2213 are butted with each other and combined to form a closed through hole, and the notches 2213 are just located at the finger pulp bending part 222. By forming the notch 2213 in the finger pulp connector 221, the flexibility of the finger pulp unit 220 can be further improved, and the degree of squeezing experienced by the finger pulp bending part 222 at the side facing away from the finger back unit 210 during bending can be reduced, enabling the bending of the finger pulp unit 220 to be more flexible.

In another embodiment, the finger pulp connector 221 is provided with notches 2213 at two opposite sides in the length direction, and the notches 2213 of adjacent finger pulp connectors 221 in the length direction are oppositely arranged. After the adjacent finger pulp connectors 221 in the length direction are connected with each other, the two notches 2213 are butted with each other and combined to form a closed through hole, and the notches 2213 are just located at the finger pulp bending part 222. The notch 2213 at the side facing away from the finger back unit 210 is set to be larger than the notch 2213 at the side facing the finger back unit 210. In this way, the finger pulp unit 220 is provided with notches 2213 at both sides, which can improve the flexibility of the finger pulp unit 220 during bending and stretching, and further improve the flexibility of the finger pulp unit 220. Moreover, because the finger module 200 faces away from the finger back unit 210 during bending, setting the notch 2213 at the side facing away from the finger back unit 210 to be larger than the notch 2213 at the side facing the finger back unit 210 is more conducive to the bending of the finger pulp unit 220 and enables the bending of the finger module 200 to be more flexible.

In the present invention, referring to Fig. 3, the finger pulp connector 221 is internally provided with a first cavity 2214 penetrating therethrough in the length direction, and the first cavities 2214 of adjacent finger pulp connectors 221 are communicated with each other. Because the finger pulp connector 221 is internally hollow, the finger pulp unit 220 has higher flexibility, and thus can generate greater deformation when bending to adapt to the shape of the object to be grabbed. Similarly, the finger back connector 211 is internally provided with a second cavity 2113 penetrating therethrough in the length direction, which allows the finger back unit 210 to possess a certain degree of flexibility and can better bend when pulled by the finger back traction wire 240 or driven by the finger pulp unit 220.

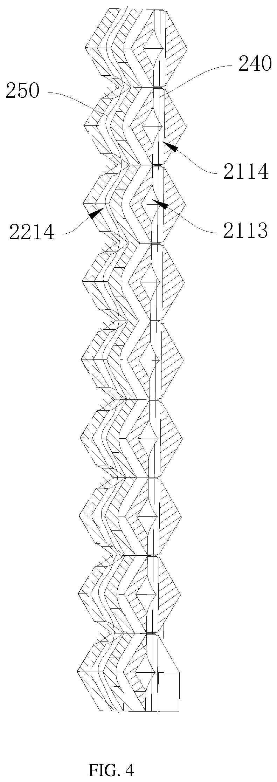

Further, referring to Fig. 4, the finger back connector 211 is internally provided with a guide hole 2114 penetrating therethrough in the length direction, the guide holes 2114 of adjacent finger back units 210 are communicated with each other, and the finger back traction wire 240 is threaded in the guide holes 2114 in sequence. When driven by the finger driving unit 230, the finger back traction wire 240 is guided by the guide holes 2114 to retract and extend in the length direction of the finger module 200, and is prevented from swinging in the finger back connector 211. Because the finger back unit 210 has certain hardness, forming the guide hole 2114 in the finger back unit 210 can accurately define the bending direction of the finger module 200 and improve the grabbing accuracy of the anthropomorphic metamorphic dexterous hand. In addition, the finger pulp traction wires 250 are directly threaded in the first cavities 2214 of the plurality of finger pulp units 220, and are configured to pull the finger pulp units 220 by means of the first cavities 2214.

In addition, the guide hole 2114 is formed at the center of the finger back connector 211 in the width direction, so that traction forces applied to different regions of the finger back connector 211 in the width direction are more uniform, and grabbing performed by the finger module 200 on the object to be grabbed is more stable.

Referring to Fig. 2, the finger module 200 further includes a fixed seat 260. The finger driving unit 230, the finger back unit 210 and the finger pulp unit 220 are all mounted on the fixed seat 260, and the fixed seat 260 is detachably connected with the palm connecting rod 110. In this way, the finger module 200 is mounted as an integrated structure on the palm connecting rod 110, and when an internal structure of the finger module 200 fails, the finger module 200 can be directly disassembled for maintenance. In addition, the finger driving unit 230 is located in the finger module 200 and is not associated with the palm driving unit 120, which can reduce the interference between different drive elements in the anthropomorphic metamorphic dexterous hand, allowing the structure of the anthropomorphic metamorphic dexterous hand to be simpler and the motion control faster.

A decelerating motor may be provided as the finger driving unit 230. The finger driving unit 230 is mounted inside the fixed seat 260, the fixed seat 260 is internally provided with a winding roller 270, and the finger back traction wire 240 or the finger pulp traction wire 250 is wound around the winding roller 270. The winding roller 270 is connected with and driven by the finger driving unit 230 to rotate, so as to wind the finger back traction wire 240 or the finger pulp traction wire 250 around the winding roller 270 or release the traction wires from the winding roller 270. Two winding rollers 270 are arranged in the fixed seat 260 in the stacking direction of the finger back unit 210 and the finger pulp unit 220, and the two winding rollers 270 are configured to wind the finger back traction wire 240 and the finger pulp traction wire 250 respectively. In addition, each winding roller 270 may be driven by a respective finger driving unit 230, or two winding rollers 270 may share one finger driving unit 230.

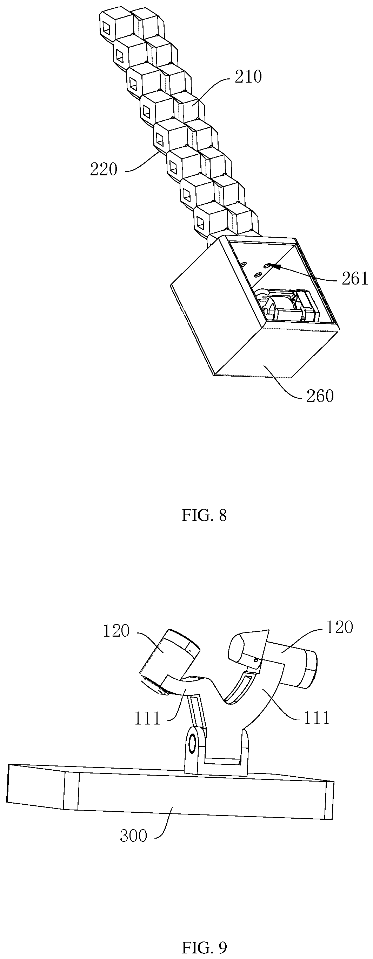

In addition, referring to Fig. 8, the finger back unit 210 and the finger pulp unit 220 are connected to an outer wall of the fixed seat 260. The fixed seat 260 is internally provided with a finger back wire guiding hole 261 extending towards the finger back unit 210 and a finger pulp wire guiding hole 261 extending towards the finger pulp unit 220, the finger back traction wire 240 is led out from the winding roller 270 to the finger back wire guiding hole 261 and introduced into the guide hole 2114 in the finger back unit 210 through the guidance of the finger back wire guiding hole 261. The finger pulp traction wire 250 is led out from the winding roller 270 to the finger pulp wire guiding hole 261 and introduced into the first cavity 2214 in the finger pulp unit 220 through the guidance of the finger pulp wire guiding hole 261.

In the present invention, referring to Fig. 9, the palm driving unit 120 is provided in two, one of the palm connecting rods 110 includes two support arms 111, and the two palm driving units 120 are respectively mounted on the two support arms 111 and configured to drive the palm connecting rods 110 connected to the support arms 111 to rotate. The rotation of the two palm connecting rods 110 can further drive other palm connecting rods 110 rotationally connected with the two palm connecting rods 110 to rotate, so that the palm module 100 can be transformed into a corresponding configuration. It should be noted that the two support arms 111 provide a mounting foundation for the palm driving units 120, so that the palm driving units 120 are integrated into the palm module 100, and the shape of the anthropomorphic metamorphic dexterous hand is more concise.

In addition, the anthropomorphic metamorphic dexterous hand further includes a base 300. The palm connecting rod 110 with two support arms 111 is rotationally connected to the base 300. When the palm connecting rod 110 rotates relative to the base 300, the positions of the palm module 100 and the finger modules 200 can be changed, and the finger modules 200 can grab objects to be grabbed at different positions, thus enlarging the grabbing range of the anthropomorphic metamorphic dexterous hand.

The embodiments of the present invention are described in detail in conjunction with the drawings, but the present invention is not limited thereto, and various modifications may be made within the knowledge of those having ordinary skills in art without departing from the scope of the present invention. In addition, the embodiments in the present invention and the features in the embodiments may be combined with each other if not in collision.

## Claims

1. An anthropomorphic metamorphic dexterous hand, comprising:
a palm module (100) comprising a plurality of palm connecting rods (110) and a palm driving unit (120), wherein the plurality of palm connecting rods (110) are rotationally connected end to end in sequence and enclosed to form a closed-loop structure, and the palm driving unit (120) is connected to some of the palm connecting rods (110) to drive adjacent palm connecting rods (110) to rotate relatively; and
a plurality of finger modules (200), some of the palm connecting rods (110) being provided with one of the finger modules (200), and each of the finger modules (200) comprising a finger back unit (210), a finger pulp unit (220) and a finger driving unit (230), wherein the finger back unit (210) and the finger pulp unit (220) are stacked, the finger pulp unit (220) has a greater flexibility than the finger back unit (210), the finger back unit (210) is internally threaded with a finger back traction wire (240), the finger pulp unit (220) is internally threaded with a finger pulp traction wire (250), one end of the finger back traction wire (240) is connected to a tail end of the finger back unit (210), the other end of the finger back traction wire (240) is connected to the finger driving unit (230), one end of the finger pulp traction wire (250) is connected to a tail end of the finger pulp unit (220), the other end of the finger pulp traction wire (250) is connected to the finger driving unit (230), and the finger driving unit (230) is configured to drive the finger back traction wire (240) and the finger pulp traction wire (250) to retract and extend to enable the finger module (200) to bend towards the finger pulp unit (220) or stretch away from the finger pulp unit (220);
wherein
the finger pulp unit (220) comprises a plurality of finger pulp connectors (221) which are arranged in a length direction of the finger module (200), edges of adjacent finger pulp connectors (221) which are close to each other are connected to form a finger pulp bending part (222), and the finger pulp bending part (222) has a smaller thickness than the finger pulp connector (221);
the finger back unit (210) comprises a plurality of finger back connectors (211) which are arranged in the length direction of the finger module (200), edges of adjacent finger back connectors (211) which are close to each other are connected to form a finger back bending part (212), and the finger back bending part (212) has a smaller thickness than the finger back connector (211);
the finger back bending part (212) and the finger pulp bending part (222) are oppositely arranged in a bending direction of the finger module (200);
the finger back connector (211) comprises four finger back connecting surfaces (2111) which are connected end to end in sequence at side edges, and vertexes of the four finger back connecting surfaces (2111) are overlapped to form finger back vertex angles (2112); and
the finger pulp connector (221) comprises four finger pulp connecting surfaces (2211) which are connected end to end in sequence at side edges, vertexes of the four finger pulp connecting surfaces (2211) are overlapped to form finger pulp vertex angles (2212), and an opening of the finger pulp vertex angle (2212) in the width direction of the finger module (200) is not smaller than an opening of the finger pulp vertex angle (2212).

2. The anthropomorphic metamorphic dexterous hand of claim 1, wherein
the plurality of finger pulp connectors (221) are arranged in a width direction of the finger module (200), edges of adjacent finger pulp connectors (221) in the width direction which are close to each other are connected to form a transition part (223), and the transition part (223) is recessed away from the finger back unit (210); and
the plurality of finger back connectors (211) are arranged in the width direction of the finger module (200), edges of adjacent finger back connectors (211) in the width direction which are close to each other are connected to form a reinforcing part (213), and the reinforcing part (213) protrudes towards the finger pulp unit (220) and is located between adjacent finger pulp units (220).

3. The anthropomorphic metamorphic dexterous hand of claim 1, wherein
the finger back unit (210) and the finger pulp unit (220) are connected to form an integrated structure; or
the finger back connector (211) and the finger pulp connector (221) are mutually adhered at opposite sides, and the finger back bending part (212) and the finger pulp bending part (222) are provided in a separate structure.

4. The anthropomorphic metamorphic dexterous hand of claim 1, wherein the finger pulp connector (221) is provided with a notch (2213) at the edge, the notches (2213) of adjacent finger pulp connectors (221) are oppositely arranged, and the notches (2213) are located at the finger pulp bending part (222).

5. The anthropomorphic metamorphic dexterous hand of claim 1, wherein the finger pulp connector (221) is provided with notches (2213) at two opposite sides in the length direction, the notches (2213) of adjacent finger pulp connectors (221) are oppositely arranged and are located at the finger pulp bending part (222), and the notch (2213) at the side facing away from the finger pulp unit (220) is larger than the notch (2213) at the side facing the finger pulp unit (220).

6. The anthropomorphic metamorphic dexterous hand of claim 1, wherein the finger pulp connector (221) is internally provided with a first cavity (2214) penetrating through the finger pulp connector (221) in the length direction, the first cavities (2214) of adjacent finger pulp connectors (221) are communicated with each other, the finger back connector (211) is internally provided with a second cavity (2113) penetrating through the finger back connector (211) in the length direction, and the second cavities (2113) of adjacent finger back connectors (211) are communicated with each other.

7. The anthropomorphic metamorphic dexterous hand of claim 6, wherein the finger back unit (210) is internally provided with a guide hole (2114) penetrating through the finger back unit (210) in the length direction, the guide holes (2114) of adjacent finger back units (210) are communicated with each other, the finger back traction wire (240) is threaded in the guide holes (2114) in sequence, and the finger pulp traction wire (250) is threaded in the first cavities (2214) in sequence.

8. The anthropomorphic metamorphic dexterous hand of claim 1, wherein the palm driving unit (120) is provided in two, one of the palm connecting rods (110) comprises two support arms (111), and the two palm driving units (120) are respectively mounted on the two support arms (111) and configured to drive the palm connecting rods (110) connected to the support arms (111) to rotate.

9. The anthropomorphic metamorphic dexterous hand of claim 1, wherein the finger module (200) comprises a fixed seat (260), the finger driving unit (230), the finger back unit (210) and the finger pulp unit (220) are all mounted on the fixed seat (260), and the fixed seat (260) is detachably connected with the palm connecting rod (110).

## Patentansprüche

1. Anthropomorphe metamorphe Geschicklichkeitshand, mit:
einem Handflächenmodul (100), das eine Mehrzahl von Handflächenverbindungsstäben (110) und eine Handflächenantriebseinheit (120) aufweist, wobei die Mehrzahl von Handflächenverbindungsstäben (110) nacheinander Ende an Ende drehbar verbunden und zu einer Ringstruktur geschlossen sind, und die Handflächenantriebseinheit (120) mit einigen der Handflächenverbindungsstäbe (110) verbunden ist, um benachbarte Handflächenverbindungsstäbe (110) zur relativen Drehung anzutreiben; und
einer Mehrzahl von Fingermodulen (200), wobei einige der Handflächenverbindungsstäbe (110) mit jeweils einem der Fingermodule (200) versehen sind, und jedes der Fingermodule (200) eine Fingerrückeneinheit (210), eine Fingerpulpaeinheit (220) und eine Fingerantriebseinheit (230) aufweist, wobei die Fingerrückeneinheit (210) und die Fingerpulpaeinheit (220) übereinandergestapelt sind, die Fingerpulpaeinheit (220) eine größere Flexibilität als die Fingerrückeneinheit (210) aufweist, die Fingerrückeneinheit (210) innen mit einem Fingerrückenzugdraht (240) durchfädelt ist, die Fingerpulpaeinheit (220) innen mit einem Fingerpulpazugdraht (250) durchfädelt ist, ein Ende des Fingerrückenzugdrahts (240) mit einem hinteren Ende der Fingerrückeneinheit (210) verbunden ist, das andere Ende des Fingerrückenzugdrahts (240) mit der Fingerantriebseinheit (230) verbunden ist, ein Ende des Fingerpulpazugdrahts (250) mit einem hinteren Ende der Fingerpulpaeinheit (220) verbunden ist, das andere Ende des Fingerpulpazugdrahts (250) mit der Fingerantriebseinheit (230) verbunden ist, und die Fingerantriebseinheit (230) dazu konfiguriert ist, den Fingerrückenzugdraht (240) und den Fingerpulpazugdraht (250) anzutreiben, um sie einzuziehen und auszufahren, damit das Fingermodul (200) in Richtung der Fingerpulpaeinheit (220) gebogen oder von der Fingerpulpaeinheit (220) weg gestreckt werden kann;
wobei
die Fingerpulpaeinheit (220) eine Mehrzahl von Fingerpulpaverbindern (221) aufweist, die in einer Längsrichtung des Fingermoduls (200) angeordnet sind, Ränder einander benachbarter Fingerpulpaverbinder (221), die einander nahe sind, verbunden sind, um ein Fingerpulpabiegeteil (222) zu bilden, und das Fingerpulpabiegeteil (222) eine geringere Dicke als der Fingerpulpaverbinder (221) aufweist;
die Fingerrückeneinheit (210) eine Mehrzahl von Fingerrückenverbindern (211) aufweist, die in der Längsrichtung des Fingermoduls (200) angeordnet sind, Ränder einander benachbarter Fingerrückenverbinder (211), die einander nahe sind, verbunden sind, um ein Fingerrückenbiegeteil (212) zu bilden, und das Fingerrückenbiegeteil (212) eine geringere Dicke als der Fingerrückenverbinder (211) aufweist;
das Fingerrückenbiegeteil (212) und das Fingerpulpabiegeteil (222) in einer Biegungsrichtung des Fingermoduls (200) einander gegenüber angeordnet sind;
der Fingerrückenverbinder (211) vier Fingerrückenverbindungsflächen (2111) aufweist, die an Seitenrändern nacheinander Ende an Ende verbunden sind, und Scheitelpunkte der vier Fingerrückenverbindungsflächen (2111) überlagert sind, um Fingerrückenscheitelwinkel (2112) zu bilden; und
der Fingerpulpaverbinder (221) vier Fingerpulpaverbindungsflächen (2211) aufweist, die an Seitenrändern nacheinander Ende an Ende verbunden sind, Scheitelpunkte der vier Fingerpulpaverbindungsflächen (2211) überlagert sind, um Fingerpulpascheitelwinkel (2212) zu bilden, und eine Öffnung des Fingerpulpascheitelwinkels (2212) in der Breitenrichtung des Fingermoduls (200) nicht kleiner ist als eine Öffnung des Fingerpulpascheitelwinkels (2212).

2. Anthropomorphe metamorphe Geschicklichkeitshand nach Anspruch 1, wobei
die Mehrzahl von Fingerpulpaverbindern (221) in einer Breitenrichtung des Fingermoduls (200) angeordnet ist, Ränder benachbarter Fingerpulpaverbinder (221) in der Breitenrichtung, die einander nahe sind, verbunden sind, um ein Übergangsteil (223) zu bilden, und das Übergangsteil (223) von der Fingerrückeneinheit (210) weg zurückgesetzt ist; und
die Mehrzahl von Fingerrückenverbindern (211) in der Breitenrichtung des Fingermoduls (200) angeordnet ist, Ränder benachbarter Fingerrückenverbinder (211) in der Breitenrichtung, die einander nahe sind, verbunden sind, um ein Verstärkungsteil (213) zu bilden, und das Verstärkungsteil (213) in Richtung der Fingerpulpaeinheit (220) vorsteht und zwischen benachbarten Fingerpulpaeinheiten (220) angeordnet ist.

3. Anthropomorphe metamorphe Geschicklichkeitshand nach Anspruch 1, wobei
die Fingerrückeneinheit (210) und die Fingerpulpaeinheit (220) verbunden sind, um eine integrierte Struktur zu bilden; oder
der Fingerrückenverbinder (211) und der Fingerpulpaverbinder (221) an gegenüberliegenden Seiten aneinanderhaftend befestigt sind, und das Fingerrückenbiegeteil (212) und das Fingerpulpabiegeteil (222) in einer separat ausgeführten Struktur vorgesehen sind.

4. Anthropomorphe metamorphe Geschicklichkeitshand nach Anspruch 1, wobei der Fingerpulpaverbinder (221) an dem Rand mit einer Kerbe (2213) versehen ist, die Kerben (2213) einander benachbarter Fingerpulpaverbinder (221) einander gegenüberliegend angeordnet sind, und die Kerben (2213) an dem Fingerpulpabiegeteil (222) angeordnet sind.

5. Anthropomorphe metamorphe Geschicklichkeitshand nach Anspruch 1, wobei der Fingerpulpaverbinder (221) an zwei gegenüberliegenden Seiten in der Längsrichtung mit Kerben (2213) versehen ist, die Kerben (2213) einander benachbarter Fingerpulpaverbinder (221) einander gegenüberliegend angeordnet und an dem Fingerpulpabiegeteil (222) gelegen sind, und die Kerbe (2213) an der von der Fingerpulpaeinheit (220) abgewandten Seite größer ist als die Kerbe (2213) an der der Fingerpulpaeinheit (220) zugewandten Seite.

6. Anthropomorphe metamorphe Geschicklichkeitshand nach Anspruch 1, wobei der Fingerpulpaverbinder (221) innen mit einem ersten Hohlraum (2214) versehen ist, der den Fingerpulpaverbinder (221) in der Längsrichtung durchdringt, die ersten Hohlräume (2214) einander benachbarter Fingerpulpaverbinder (221) miteinander in Verbindung stehen, der Fingerrückenverbinder (211) innen mit einem zweiten Hohlraum (2113) versehen ist, der den Fingerrückenverbinder (211) in der Längsrichtung durchdringt, und die zweiten Hohlräume (2113) einander benachbarter Fingerrückenverbinder (211) miteinander in Verbindung stehen.

7. Anthropomorphe metamorphe Geschicklichkeitshand nach Anspruch 6, wobei die Fingerrückeneinheit (210) innen mit einem Führungsloch (2114) versehen ist, das die Fingerrückeneinheit (210) in der Längsrichtung durchdringt, die Führungslöcher (2114) einander benachbarter Fingerrückeneinheiten (210) miteinander in Verbindung stehen, der Fingerrückenzugdraht (240) nacheinander durch die Führungslöcher (2114) geführt ist, und der Fingerpulpazugdraht (250) nacheinander durch die ersten Hohlräume (2214) geführt ist.

8. Anthropomorphe metamorphe Geschicklichkeitshand nach Anspruch 1, wobei die Handflächenantriebseinheit (120) in zweifacher Ausführung vorgesehen ist, einer der Handflächenverbindungsstäbe (110) zwei Tragarme (111) aufweist, und die zwei Handflächenantriebseinheiten (120) jeweils auf den zwei Tragarmen (111) montiert und dazu konfiguriert sind, die mit den Tragarmen (111) verbundenen Handflächenverbindungsstäbe (110) zur Drehung anzutreiben.

9. Anthropomorphe metamorphe Geschicklichkeitshand nach Anspruch 1, wobei das Fingermodul (200) einen Befestigungssockel (260) aufweist, die Fingerantriebseinheit (230), die Fingerrückeneinheit (210) und die Fingerpulpaeinheit (220) alle auf dem Befestigungssockel (260) montiert sind, und der Befestigungssockel (260) lösbar mit dem Handflächenverbindungsstab (110) verbunden ist.

## Revendications

1. Main agile métamorphique anthropomorphique, comprenant :
un module de paume (100) comprenant une pluralité de tiges de connexion de paume (110) et une unité d'entraînement de paume (120), dans laquelle la pluralité de tiges de connexion de paume (110) sont connectées par rotation de bout en bout de manière séquentielle et renfermées pour former une structure en boucle fermée, et l'unité d'entraînement de paume (120) est connectée à certaines tiges des tiges de connexion de paume (110) pour entraîner en rotation de manière relative des tiges de connexion de paume adjacentes (110), et
une pluralité de modules de doigts (200), certaines des tiges de connexion de paume (110) étant pourvues d'un des modules de doigts (200), et chacun des modules de doigts (200) comprenant une unité de dos de doigt (210), une unité de pulpe de doigt (220) et une unité d'entraînement de doigt (230), dans laquelle l'unité de dos de doigt (210) et l'unité de pulpe de doigt (220) sont empilées, l'unité de pulpe de doigt (220) présente une plus grande flexibilité que l'unité de dos de doigt (210) ; l'unité de dos de doigt (210) présente un filetage interne avec un fil de traction de dos de doigt (240), l'unité de pulpe de doigt (220) présente un filetage interne avec un fil de traction de pulpe de doigt (250) ; une extrémité du fil de traction de dos de doigt (240) est connectée à une extrémité de queue de l'unité de dos de doigt (210) ; l'autre extrémité du fil de traction de dos de doigt (240) est connectée à l'unité d'entraînement de doigt (230) ; une extrémité du fil de traction de pulpe de doigt (250) est connectée à une extrémité de queue de l'unité de pulpe de doigt (220) ; l'autre extrémité du fil de traction de pulpe de doigt (250) est connectée à l'unité d'entraînement de doigt (230), et l'unité d'entraînement de doigt (230) est configurée pour entraîner la rétraction et l'extension du fil de traction de dos de doigt (240) et du fil de traction de pulpe de doigt (250) pour permettre au module de doigts (200) de fléchir vers l'unité de pulpe de doigt (220) ou de s'écarter de l'unité de pulpe de doigts (220) ;
dans laquelle
l'unité de pulpe de doigt (220) comprend une pluralité de connecteurs de pulpe de doigt (221), lesquels sont agencés dans une direction de longueur du module de doigts (200), des bords de connecteurs de pulpe de doigt adjacents (221), lesquels sont proches les uns des autres, sont connectés pour former une partie de flexion de pulpe de doigt (222), et la partie de flexion de pulpe de doigt (222) présente une épaisseur plus petite que le connecteur de pulpe de doigt (221) ;
l'unité de dos de doigt (210) comprend une pluralité de connecteurs de dos de doigt (211), lesquels sont agencés dans la direction de longueur du module de doigts (200), des bords de connecteurs de dos de doigt adjacents (211), lesquels sont proches les uns des autres, sont connectés pour former une partie de flexion de dos de doigt (212), et la partie de flexion de dos de doigt (212) présente une épaisseur plus petite que le connecteur de dos de doigt (211) ;
la partie de flexion de dos de doigt (212) et la partie de flexion de pulpe de doigt (222) sont agencées en opposition dans une direction de flexion du module de doigts (200) ;
le connecteur de dos de doigt (211) comprend quatre surfaces de connexion de dos de doigt (2111), lesquelles sont connectées de bout en bout de manière séquentielle sur des bords latéraux, et des sommets des quatre surfaces de connexion de dos de doigt (2111) se chevauchent pour former des angles de sommet de dos de doigt (2112), et
le connecteur de pulpe de doigt (221) comprend quatre surfaces de connexion de pulpe de doigt (2211), lesquelles sont connectées de bout en bout de manière séquentielle sur des bords latéraux, des sommets des quatre surfaces de connexion de pulpe de doigt (2211) se chevauchent pour former des angles de sommet de pulpe de doigt (2212), et une ouverture de l'angle de sommet de pulpe de doigt (2212) dans la direction de largeur du module de doigts (200) n'est pas plus petite qu'une ouverture de l'angle de sommet de pulpe de doigt (2212).

2. Main agile métamorphique anthropomorphique selon la revendication 1, dans laquelle
la pluralité de connecteurs de pulpe de doigt (221) sont agencés dans une direction de largeur du module de doigts (200) ; des bords de connecteurs de pulpe de doigt adjacents (221) dans la direction de largeur, lesquels sont proches les uns des autres, sont connectés pour former une partie de transition (223), et la partie de transition (223) est en retrait à distance de l'unité d'entraînement de dos de doigt (210), et
la pluralité de connecteurs de dos de doigt (211) sont agencés dans la direction de largeur du module de doigts (200) ; des bords de connecteurs de dos de doigt adjacents (211) dans la direction de largeur, lesquels sont proches les uns des autres, sont connectés pour former une partie de renforcement (213), et la partie de renforcement (213) fait saillie vers l'unité de pulpe de doigt (220) et se trouve entre des unités de pulpe de doigt adjacentes (220).

3. Main agile métamorphique anthropomorphique selon la revendication 1, dans laquelle
l'unité de dos de doigt (210) et l'unité de pulpe de doigt (220) sont connectées pour former une structure intégrée, ou
le connecteur de dos de doigt (211) et le connecteur de pulpe de doigt (221) adhèrent l'un à l'autre sur des côtés opposés, et la partie de flexion de dos de doigt (212) et la partie de flexion de pulpe de doigt (222) sont fournies dans une structure séparée.

4. Main agile métamorphique anthropomorphique selon la revendication 1, dans laquelle
le connecteur de pulpe de doigt (221) est doté d'une encoche (2213) sur le bord, les encoches (2213) de connecteurs de pulpe de doigt adjacents (221) sont agencées en opposition, et les encoches (2213) se trouvent sur la partie de flexion de pulpe de doigt (222).

5. Main agile métamorphique anthropomorphique selon la revendication 1, dans laquelle
le connecteur de pulpe de doigt (221) est doté d'encoches (2213) sur deux côtés opposés dans la direction de longueur ; les encoches (2213) de connecteurs de pulpe de doigt adjacents (221) sont agencées en opposition, et sont situées sur la partie de flexion de pulpe de doigt (222), et l'encoche (2213) sur le côté orienté à distance de l'unité de pulpe de doigt (220) est plus grande que l'encoche (2213) sur le côté faisant face à l'unité de pulpe de doigt (2220).

6. Main agile métamorphique anthropomorphique selon la revendication 1, dans laquelle
le connecteur de pulpe de doigt (221) est doté à l'intérieur d'une première cavité (2214) pénétrant à travers le connecteur de pulpe de doigt (221) dans la direction de longueur ; les premières cavités (2214) des connecteurs de pulpe de doigt adjacents (221) communiquent entre elles ; le connecteur de dos de doigt (211) est doté à l'intérieur d'une seconde cavité (2113) pénétrant à travers le connecteur de dos de doigt (211) dans la direction de longueur, et les secondes cavités (2113) de connecteurs de dos de doigt adjacents (211) communiquent entre elles.

7. Main agile métamorphique anthropomorphique selon la revendication 6, dans laquelle
l'unité de dos de doigt (210) est dotée à l'intérieur d'un trou de guidage (2114) pénétrant à travers l'unité de dos de doigt (210) dans la direction de longueur ; les trous de guidage (2114) d'unités de dos de doigt adjacentes (210) communiquent entre eux ; le fil de traction de dos de doigt (240) est vissé dans les trous de guidage (2114) de manière séquentielle, et le fil de traction de pulpe de doigt (250) est vissé dans les premières cavités (2214) de manière séquentielle.

8. Main agile métamorphique anthropomorphique selon la revendication 1, dans laquelle
l'unité d'entraînement de paume (120) est fournie en deux parties, une des tiges de connexion de paume (110) comprend deux bras de support (111), et les deux unités d'entraînement de paume (120) sont montées respectivement sur les deux bras de support (111), et configurées pour entraîner en rotation les tiges de connexion de paume (110) connectées aux bras de support (111).

9. Main agile métamorphique anthropomorphique selon la revendication 1, dans laquelle
le module de doigts (200) comprend une assise fixe (260) ; l'unité d'entraînement de doigt (230), l'unité de dos de doigt (210), et l'unité de pulpe de doigt (220) sont toutes montées sur l'assise fixe (260), et l'assise fixe (260) est connectée de manière amovible avec la tige de connexion de paume (110).
